# EUROPÄISCHE PATENTANMELDUNG

(11) **EP 0 771 088 A2**
(43) Veröffentlichungstag der Anmeldung: **02.05.1997**
(21) Anmeldenummer: 96810650.0
(22) Anmeldetag: 30.09.1996
(51) Int. Cl.: H04B 10/08

(54) **Lichtwellenleiter-Übertragungssystem mit Überprüfungstest**

(30) Priorität: 27.10.1995 DE 19540046
(71) Anmelder: ASEA BROWN BOVERI AG, 5401 Baden (CH)
(72) Erfinder: Hochstuhl, Gerhard, 79761 Waldshut-Tiengen (DE); Maibach, Philippe, 5200 Brugg (CH)
(74) Vertreter: Weibel, Beat

(57) **Zusammenfassung**

Es wird ein Lichtwellenleiterübertragungssystem angegeben, welches auf einfache Art und Weise auf genügende Leistungsreserve überprüft werden kann. Zu diesem Zweck wird ein Sendestrom ID mit einer Frequenz f_{T} moduliert, indem der Strom zwischen einem Normalwert I_{DN} und einem geringeren Testwert I_{DT}, ungleich Null, umgeschaltet wird.

## Beschreibung

### Technisches Gebiet

Die Erfindung bezieht sich auf das Gebiet der Optoelektronik. Sie geht aus von einem Lichtwellenleiter-Übertragungssytem, insbesondere für die Übertragung von Steuersignalen zwischen einem Controller und einer Ansteuereinheit z.B. eines Antriebsleitsystems einer elektrisch angetriebenen Lokomotive, gemäss dem Oberbegriff des ersten Anspruchs.

### Stand der Technik

Ein Lichtwellenleiter-Übertragungssystem umfasst, unabhängig davon, ob es in einer Lokomotive eingesetzt wird oder anderswo, mindestens einen Lichtwellensender und einen Lichtwellenempfänger, welche über einen Lichtwellenleiter verbunden sind. Über den Lichtwellenleiter werden Informationen, technisch ausgedrückt Signale, schnell, verlustarm, störsicher und potentialfrei übertragen. Abhängig von den Anforderungen an die Übertragungsstrecke werden verschiedene Wellenlängen eingesetzt, z.B. 650 nm, 850 nm, 1300 nm usw. Lichtwellenleiter-Übertragungssysteme werden in einem weiten Anwendungsbereich ausgehend von Datenübertragungen in klimatisierten Räumen bis hin zur Signalübertragung in Traktionsanwendungen, welche grossen Temperaturschwankungen und Rüttelbedingungen in elektromagnetisch stark verseuchter Umgebung mit grossen Potentialdifferenzen ausgesetzt sind, eingesetzt.

Lichtwellenleiter-Übertragungssysteme weisen zwar unbestrittene Vorteile auf, sie haben aber auch einige Problemseiten:
- Die Senderleistung ist einer starken Exemplarstreuung unterworfen.
- Die Senderleistung nimmt mit der Zeit ab (je nach Wellenlänge von kaum feststellbar bis sehr stark).
- Lichtwellenleiter aus Kunststoff altern sehr stark. Die Alterung wird durch starke Temperaturschwankungen noch zusätzlich erhöht.
- Die Oberfläche der Kontaktstellen der Lichtwellenleiter wird bei oftmaligem Wechsel der Stecker zerkratzt, was die Dämpfung zusätzlich erhöht.
- Die Empfindlichkeit der Empfänger unterliegt ebenfalls einer starken Exemplarstreuung.

Das grösste Problem stellen die Alterung und die abnehmende Senderleistung dar. Bei der Auslegung eines Lichtwellenleiter-Übertragungssystems muss sicher gestellt werden, dass die einmal berechnete optische Leistungsreserve auch noch nach vielen Jahren Einsatz unter harten Bedingungen zur Verfügung steht. Der Ausfall einer Lichtleiterstrecke z.B. infolge zu starker Dämpfung des Lichtwellenleiters kann ganze Anlagen lahmlegen. Insbesondere muss, z.B. beim Einsatz in einer Lokomotive, mit einer Beeinträchtigung der Leistung oder sogar dem vollständigen Ausfall gerechnet werden.

Wünschenswert wäre ein Lichtwellenleiterübertragungssystem, bei welchem in einem Testmodus die optische Leistungsreserve auf einfache Art und Weise festgestellt werden könnte.

### Darstellung der Erfindung

Aufgabe der vorliegenden Erfindung ist es deshalb, ein Lichtwellenleiterübertragungssystem anzugeben, bei welchem in einem Testmodus festgestellt werden kann, ob noch genügend optische Leistungsreserve vorhanden ist.

Diese Aufgabe wird bei einem Lichtwellenleiterübertragungssystem der eingangs genannten Art durch die Merkmale des ersten Anspruchs gelöst.

Kern der Erfindung ist es also, dass eine Speiseschaltung des Lichtwellensenders in einem Testmodus des Lichtwellenleiter-Übertragungssystems den Sendestrom, um den Lichtwellenleiter funktionell zu überprüfen, mit einer vorgegebenen Frequenz f_{T} moduliert. Der Sendestrom wird dabei vorzugsweise zwischen einem Normalwert IDN und einem geringeren Testwert I_{DT} ungleich Null mit der Frequenz f_{T} umgeschaltet. Denkbar sind auch andere Modulationsarten mit z.B. dreiecks- oder sinusförmigen Signalverläufen. Ist nun die Dämpfung des Lichtwellenleiters zu gross bzw. hat die Senderleistung allzu stark abgenommen, so wird der Testwert I_{DT} im Empfänger als "kein optisches Signal" interpretiert und somit ein elektrisches Signal der Frequenz f_{T} detektiert. Demzufolge kann aus der Tatsache, dass der Empfänger im Testmodus ein elektrisches Dauersignal abgibt, auf eine derzeit noch genügende optische Leistungsreserve geschlossen werden. Bei entsprechender Wahl des Testwertes I_{DT} bedeutet die Detektion eines periodischen elektrischen Signals im Testmodus, dass die Leistungsreserve erreicht ist und das Übertragungssystem demnächst einer Revision unterzogen werden muss.

Vorteilhaft an der Erfindung ist insbesondere, dass das Erreichen einer Leistungsreserve genügend früh und bevor das System bereits nicht mehr einsetzbar ist, erkannt wird. Die Überprüfung kann im übrigen ohne grosse Abänderung des Systems durch eine einfache Anpassung der Ansteuerung vorgenommen werden. Voraussetzung dafür ist jedoch, dass die Auswerteschaltung der elektrisch gewandelten Empfängersignale in der Lage sein muss, ein Signal der Frequenz f_{T} zu erkennen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockschema eines Lichtwellenleiterübertragungssystems;
- **Fig. 2**: Die Sendeleistung in Abhängigkeit des Sendestromes;
- **Fig. 3**: Ein Diagramm der optischen Leistungsbereiche;
- **Fig. 4**: Den zeitlichen Verlauf von Sende- und Empfangssignalen im Normalbetrieb und im Testmodus;
- **Fig. 5**: Ein Realisierungsbeispiel für die Speiseschaltung nach der Erfindung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

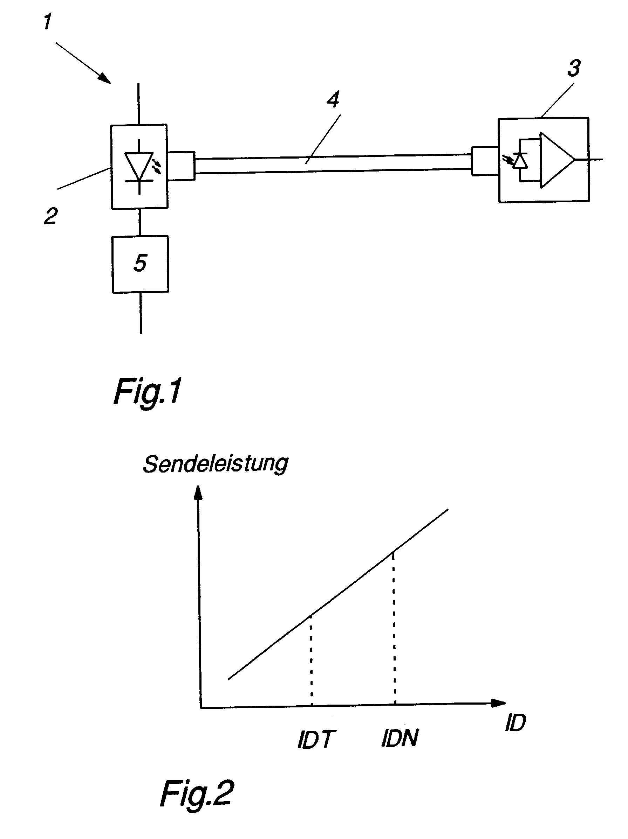

Figur 1 zeigt schematisch ein Lichtwellenleiter-Übertragungssystem 1. Dieses umfasst mindestens einen Lichtwellensender 2 und einen Lichtwellenempfänger 3, welche über einen Lichtwellenleiter 4 verbunden sind. Durch Ansteuerung einer einen Sendestrom I_{D} abgebenden Speiseschaltung 5 werden elektrische Signale mittels einer Sendediode in optische Signale umgewandelt und über den Lichtwellenleiter 4 übertragen. Diese optischen Signal können im Empfänger 3 detektiert werden. Im Empfänger 3 werden die Signale verstärkt und in digitale elektrische Signale zurückgewandelt. Die elektrischen Signale entsprechen z.B. Informationen, Steuerbefehlen o.ä.

Der Lichtwellenleiter 4 unterliegt einer natürlichen, altersbedingten Dämpfung, welche aber z.B. durch extreme Temperaturschwankungen noch verstärkt werden kann. Die Leistung des Senders 2 kann mit der Zeit stark abnehmen. Die Dämpfung bzw. die abnehmende Senderleistung haben zur Folge, dass ein optisches Signal nicht mehr korrekt übertragen wird. Im Empfänger wird dies so interpretiert, wie wenn kein optisches Signal anliegen würde, und der Empfänger detektiert somit eine digitale Null statt einer Eins.

So können auch Teile des Traktionsleitsystems einer elektrisch angetriebenen Lokomotive mit derartigen Lichtwellenleiterübertragungssystemen ausgerüstet sein. Insbesondere wird die Signalübertragung von den Controllern zu den Ansteuereinheiten der Antriebsstromrichter mittels Lichtwellenleiter ausgeführt. Diese Controller sind mit einer Selbsttestfähigkeit ausgerüstet. Wird nun ein Übertragungsfehler z.B. aufgrund der altersbedingten Dämpfung der Lichtwellenleiter oder der abnehmenden Senderleistung festgestellt, so wird der entsprechende Umrichterblock der Lokomotive abgeschaltet, bzw. gar nicht in Betrieb genommen. Dies hat eine drastische Leistungsverminderung der Lokomotive bzw. allenfalls gar einen Stillstand zur Folge.

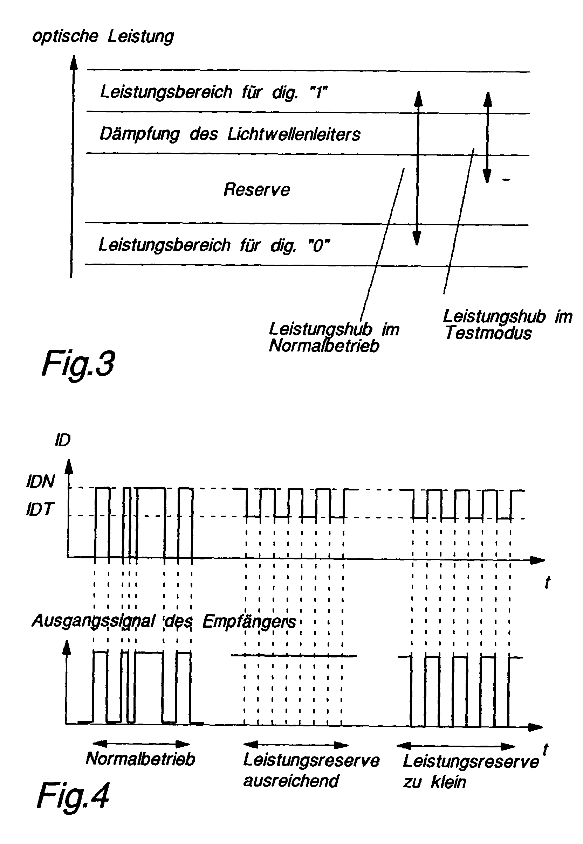

Ziel der vorliegenden Erfindung ist es deshalb, ein Lichtwellenleiterübertragungssystem anzugeben, welches auf einfache Art und Weise sich selber auf genügend Leistungsreserve prüfen kann. Da die optische Senderleistung eine Funktion des Stromes durch die Sendediode ist, siehe z.B. Figur 2, genügt eine Modulation des Sendestromes I_{D} mit einer vorgegebenen Frequenz fT. Figur 3 zeigt in einem Diagramm, wie die optischen Signale in elektrische Ausgangssignale des Empfängers umgewandelt werden. Ein bestimmter optischer Leistungsbereich wird im Empfänger als digitale "1" interpretiert. Ein tiefer liegender Leistungsbereich wird als digitale "0" interpretiert. Ist nun das Signal z.B. wegen der starken Dämpfung des Lichtwellenleiters oder der verminderten Leistung des Senders 2 so schwach, dass ein einer "1" entsprechendes Signal in den "0"-Leistungsbereich fällt, so detektiert der Empfänger überhaupt keine Signale mehr und es wird keine Information mehr übertragen. Um einen sicheren Betrieb garantieren zu können, sollte immer eine genügend grosse Leistungsreserve vorhanden sein.

In einem Testmodus kann nach der Erfindung nun überprüft werden, ob diese Reserve noch vorhanden ist. Dies wird dadurch erreicht, dass ein Testsignal im Bereich der Reserve angelegt wird und untersucht wird, ob eine digitale Null (= Reserve nicht mehr vorhanden) oder eine digitale Eins (= Reserve noch vorhanden) detektiert wird. Dies wird dadurch erreicht, dass zu Prüfzwecken der Strom I_{D} zwischen einem Normalwert I_{DN} und einem niedrigeren Testwert I_{DT} umgeschaltet wird (siehe Figur 4). Im Fall, der in der Figur 4 Mitte dargestellt ist, ist das Testsignal noch nicht so schwach, dass die dem Teststrom I_{DT} entsprechende optische Leistung bereits in den "0"-Bereich fällt und eine digitale Null detektiert wird. Die Leistungsreserve ist somit ausreichend. Im Fall, der Figur 4 rechts dargestellt ist, ist das Testsignal jedoch bereits so schwach, dass eine digitale Null detektiert wird. Die Leistungsreserve ist also nicht mehr ausreichend. Die Empfindlichkeit, bzw. die Grösse der Reserve kann dabei durch entsprechende Wahl des Teststromes I_{DT} eingestellt werden. In Figur 4 ist auf der linken Seite im übrigen noch der Normalbetrieb dargestellt, bei welchem der Hub des Sendestromes I_{D} von Null bis zu I_{DN} reicht.

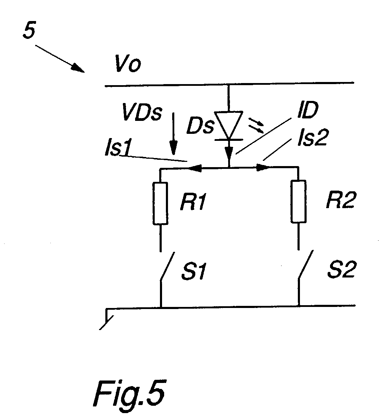

Figur 5 gibt ein Beispiel für eine mögliche Realisierung der Speiseschaltung 5. Eine Sendediode D_{S} ist einerseits an eine Versorgungsspannung V_{O} und andererseits über die Parallelschaltung von zwei Serieschaltungen eines ersten R₁ bzw. zweiten Widerstandes R₂ und eines ersten S₁ bzw. zweiten Schalters S₂ an Masse angeschlossen. Die Schalter S₁ und S₂ werden z.B. von Transistoren gebildet. Im Normalbetrieb werden beide Schalter S₁ und S₂ nach Massgabe der zu übertragenden digitalen Signale synchron getaktet. Damit schaltet der Sendestrom I_{D} zwischen einem Normalwert I_{DN} = I_{S1} + I_{S2} und Null um. Im Testmodus wird nur ein Schalter, z.B. S₁, mit der vorgegebenen Frequenz f_{T} getaktet, während der andere Schalter dauernd geschlossen gehalten wird. Dadurch wechselt im Testmodus zwischen einem Teststrom I_{DT}=(V_{O} - V_{DS})/R₁ und dem Normalstrom I_{DN}=(V_{O} - V_{DS})/R₁∥R₂.

Mit einem erfindungsgemässen Lichtwellenleiterübertragungssystem ist es nun möglich, ein Antriebsleitsystem für z.B. eine elektrisch angetriebene Lokomotive zu bauen, welches eine Möglichkeit zum Test auf genügend Leistungsreserve aufweist: Die Hochleistungsumrichter der Antriebsstromrichter werden mit GTOs (abschaltbaren Thyristoren) ausgerüstet. Ein Stromrichter umfasst üblicherweise mindestens 6 GTOs. Bei Traktionsstromrichtern mit mehreren einzeln angetriebenen Drehgestellen werden somit pro Lokomotive bis zu 60 GTOs eingesetzt. Jeder der GTOs benötigt eine Ansteuereinheit. Die Ansteuereinheiten ihrerseits werden von einem Controller angesteuert, der den gesamten Stromrichter und damit das Fahrzeug steuert. Der Informationsaustausch zwischen - den einzelnen Ansteuereinheiten und dem Controller wird mittels Lichtwellenleitern durchgeführt. Pro Ansteuereinheit werden häufig zwei Lichtwellenleiter und damit auch zwei Lichtwellenleiterübertragungssysteme eingesetzt. Der eine Lichtwellenleiter überträgt die Steuersignale vom Controller zur jeweiligen Ansteuereinheit; der andere Lichtwellenleiter überträgt ein Rückmeldesignal von der Ansteuereinheit zum Controller.

Falls eines dieser Sub-Systeme, bestehend aus GTO, zugehöriger Ansteuereinheit und den zwei Lichtwellenleitern, einen Fehler zeigt, welcher vom Controller an einem fehlerhaften Rückmeldesignal erkannt wird, so muss der betroffene Stromrichter abgeschaltet werden. Bei Lokomotiven, die pro Drehgestell z.B. nur einen Stromrichter aufweisen, ergibt sich dadurch eine erhebliche Verminderung der zur Verfügung stehenden Leistung.

Praktisch alle Stromrichteranlagen werden periodisch ein- und ausgeschaltet. So auch diejenigen der elektrisch angetriebenen Lokomotiven, z.B. über Nacht. Dies gibt die Möglichkeit, mit einem erfindungsgemässen Lichtwellenleiterübertragungssystem auf einfache Art und Weise festzustellen, ob noch genügend Leistungsreserve vorhanden ist: Zunächst wird die Elektronik, also auch der Controller und die Ansteuereinheiten, mit Spannung versorgt. Bevor die Stromrichter mit Spannung versorgt werden, wird ein Test der Lichtwellenleiterübertragungssysteme vorgenommen. Zum Testen des für das Rückmeldesignal zur Verfügung stehenden Lichtwellenleiters wird das Rückmeldesignal nach Art der Erfindung von der Ansteuereinheit moduliert. Falls der Controller keine Modulation feststellt, so hat der Übertragungskanal für das Rückmeldesignal noch die benötigte Reserve.

Der Übertragungskanal für die Steuersignale wird wie folgt getestet: Der erste Steuerimpuls, der die Testphase des Rückmeldesignals beendet, wird nach Art der Erfindung moduliert. Weist der Übertragungskanal noch die benötigte Reserve auf, so ist dies am Rückmeldesignal zu erkennen, da die Ansteuereinheit keine Schalthandlungen ausführt. Weist der Übertragungskanal aber die benötigte Reserve nicht mehr auf, so wird im Empfänger der Ansteuereinheit ein digitales Signal detektiert und es werden Schaltimpulse abgegeben. Dies hat ein anderes Rückmeldesignal zur Folge, was im Controller detektiert wird. Diese Fehlerdetektion wird angezeigt und fordert zu einer baldigen Revision des Lichtwellenleiterübertragungssystems auf.

Die Erfindung wurde vorstehend an Hand einer elektrisch angetriebenen Lokomotive erklärt. Sie ist jedoch keinesfalls darauf beschränkt, sondern kann für jedes beliebige Lichtwellenleiterübertragungssystem eingesetzt werden. Wichtig ist nur, dass der Test in einer Phase, während der keine Signale übertragen werden, durchgeführt wird. Dazu bieten sich insbesondere Startphasen an.

Mit der Erfindung ist es möglich, ein Lichtwellenleiterübertragungssystem zu bauen, welches auf einfache Art und Weise und ohne grosse Anpassungen des Systems funktionell überprüft werden kann. Von Vorteil ist auch, dass das Erreichen einer ungenügenden Leistungsreserve so rechtzeitig angezeigt wird, dass noch genügend Zeit für eine Revision zur Verfügung steht und kein unerwarteter Ausfall auftritt.

### Bezugszeichenliste

- 1: Lichtwellenleiter-Übertragungssystem
- 2: Lichtwellensender
- 3: Lichtwellenempfänger
- 4: Lichtwellenleiter
- 5: Speiseschaltung
- I_{D}: Sendestrom
- I_{DN}: Normalwert des Sendestroms
- I_{DT}: Testwert des Sendestroms
- F_{T}: Testfrequenz
- D_{S}: Sendediode
- R₁, R₂: Widerstände
- S₁, S₂: Schalter
- I_{S1}: Strom durch S₁
- I_{S2}: Strom durch S₂
- V₀: Speisespannung
- V_{DS}: Vorwärtsspannungsabfall der Sendediode

## Patentansprüche

1. Lichtwellenleiter-Übertragungssystem (1), insbesondere für die Übertragung von Steuersignalen zwischen einem Controller und einer Ansteuereinheit z.B. eines Antriebsleitsystems einer elektrisch angetriebenen Lokomotive, umfassend:
(a) einen Lichtwellensender (2) und einen Lichtwellenempfänger (3), welche über mindestens einen Lichtwellenleiter (4) verbunden sind;
(b) eine Sendediode D_{S}, welche im Lichtwellensender (2) angeordnet ist und von einer einen Sendestrom I_{D} abgebenden Speiseschaltung (5) angesteuert wird;
dadurch gekennzeichnet, dass
(c) die Speiseschaltung (5) in einem Testmodus des Lichtwellenleiter-Übertragungssystems (1) den Sendestrom I_{D}, um das Lichtwellenleiter-Übertragungssystem (1) funktionell zu überprüfen, mit einer vorgegebenen Frequenz f_{T} moduliert.

2. Übertragungssystem nach Anspruch 1, dadurch gekennzeichnet, dass die Speiseschaltung (5) den Sendestrom I_{D} im Testmodus mit der Frequenz f_{T} zwischen einem Normalstrom I_{DN} und einen Teststrom I_{DT}, ungleich Null und betragsmässig kleiner als I_{DN}, umschaltet.

3. Antriebsleitsystem, insbesondere einer elektrisch angetriebenen Lokomotive, dadurch gekennzeichnet, dass zwischen einem Controller und mindestens einer Ansteuereinheit des Antriebsleitsystems mindestens ein Lichtwellenleiter-Übertragungssystem (1) nach einem der vorstehenden Ansprüche vorgesehen ist.

4. Verfahren zum Überprüfen eines Antriebsleitsystems, insbesondere einer elektrisch angetriebenen Lokomotive, welches Antriebsleitsystem mindestens einen Controller und eine Ansteuereinheit umfasst, welche über mindestens einen Lichtwellenleiter (4) verbunden sind, dadurch gekennzeichnet, dass ein Sendestrom I_{D}, welcher von einer in einem Lichtwellensender (2) angeordneten, eine Sendediode D_{S} speisenden Speiseschaltung (5) abgegeben wird, mit einer vorgegebenen Frequenz f_{T} moduliert wird, wobei der Lichtwellensender (2) Teil des Controllers und/oder der Ansteuereinheit ist.

5. Verfahren nach Anspruch 4, dadurch gekennzeichnet, dass der Sendestrom I_{D} mit der Frequenz f_{T} zwischen einem Normalstrom I_{DN} und einen Teststrom I_{DT}, ungleich Null und betragsmässig kleiner als I_{DN}, umgeschaltet wird.
